# DEMANDE DE BREVET EUROPEEN

(11) **EP 2 490 202 A1**
(43) Date de publication de la demande: **22.08.2012**
(21) Numéro de dépôt: 12155416.6
(22) Date de dépôt: 14.02.2012
(51) Int. Cl.: G09B 21/00

(54) **Systeme d'informations pour malvoyants sur des produits**

(30) Priorité: 16.02.2011 FR 1151280
(71) Demandeur: Stratus Packaging, 01440 Viriat (FR)
(72) Inventeur: Goutenoir, Xavier, 01440 Viriat (FR); Chauveau, Julien, 01000 Bourg-en-Bresse (FR)
(74) Mandataire: Colombo, Michel

(57) **Abrégé**

L'invention concerne un système d'informations pour malvoyants, sur des produits, comportant un symbole tactile permettant à une personne malvoyante de localiser avec ses doigts un code à deux dimensions imprimé sur une face solidaire d'un produit, ce symbole tactile comprenant au moins deux parties (32) en relief situées de part et d'autre du centre du code à deux dimensions et à moins d'un centimètre de la périphérie la plus proche de ce code à deux dimensions, le centre du code à deux dimensions étant le centre du plus petit cercle incluant le code à deux dimensions, **caractérisé en ce que** ces parties (32) en relief sont réalisées par une surépaisseur de vernis (40) dont la hauteur est d'au moins 160µm par rapport à la face sur laquelle est imprimé le code à deux dimensions.

## Description

La présente invention concerne un système d'informations, pour malvoyants, sur des produits. Elle concerne également une étiquette pour la réalisation de ce système d'informations, et un procédé de fabrication d'une telle étiquette.

Les systèmes d'informations pour malvoyants, sur des produits, comprennent:
- une face solidaire du produit, sur laquelle est imprimé un code à deux dimensions, formé d'une matrice à deux dimensions constituée de cases d'une couleur et d'autres cases d'une autre couleur, ce code à deux dimensions encodant un identifiant d'un serveur,
- un serveur correspondant à l'identifiant encodé par le code à deux dimensions, ce serveur étant programmé pour donner des informations sur le produit sur lequel figure le code à deux dimensions,
- un appareil électronique de lecture du code à deux dimensions équipé d'un capteur apte à acquérir le code à deux dimensions uniquement lorsque celui-ci se trouve dans le champ de lecture de ce capteur, cet appareil étant apte:
   - à décoder l'identifiant encodé dans le code acquis,
   - à se connecter par l'intermédiaire d'un réseau grande distance de transmission sans fil d'informations au serveur correspondant à l'identifiant décodé, et
   - à restituer les informations sur le produit fournies par ce serveur sous une forme directement perceptible et compréhensible par une personne malvoyante, et
- un symbole tactile permettant à une personne malvoyante de localiser avec ses doigts le code à deux dimensions, ce symbole tactile comprenant au moins deux parties en relief situées de part et d'autre du centre du code à deux dimensions et à moins d'un centimètre de la périphérie la plus proche de ce code à deux dimensions, le centre du code à deux dimensions étant le centre du plus petit cercle incluant le code à deux dimensions. L'ensemble du code à deux dimensions et du symbole tactile constitue ainsi un code à trois dimensions.

Les codes à deux dimensions présents sur les produits ont une capacité de stockage d'informations importante et peuvent être lus dans n'importe quel sens. De plus, les codes à deux dimensions sont lus par presque n'importe quelle caméra de téléphone portable ou d'ordinateur.

La difficulté pour des personnes malvoyantes est de localiser sur le produit ce code à deux dimensions, afin de pouvoir le capter avec la caméra de leur téléphone portable, par exemple.

Pour cela, le déposant connaît des codes à deux dimensions imprimés en surépaisseur sur la face du produit. Le pourtour du code forme alors un symbole tactile, ici une arête, qu'un malvoyant peut localiser en palpant le produit. Toutefois, l'impression en surépaisseur de l'ensemble du code à deux dimensions n'est pas simple à réaliser et s'avère donc coûteuse.

Il est donc souhaitable de proposer un nouveau système d'informations dans lequel le symbole tactile permettant de repérer la position du code à deux dimensions est plus simple à réaliser.

L'invention a donc pour objet un système d'informations sur des produits dans lequel les parties en relief constituant le symbole tactile sont réalisées par une surépaisseur de vernis dont la hauteur est d'au moins 160µm par rapport à la face sur laquelle est imprimé le code à deux dimensions.

La réalisation de parties en relief en vernis pour localiser le code à deux dimensions est un procédé facile à mettre en oeuvre.

Selon un mode de réalisation de ce système d'informations, l'appareil de lecture restitue les informations sur les produits sous forme d'un message vocal directement audible et compréhensible par un être humain.

Ce mode de réalisation constitue un moyen simple pour restituer les informations sur les produits.

L'invention a également pour objet une étiquette pour la réalisation du système d'informations ci-dessus, cette étiquette comprenant:
- une face, destinée à être collée sur des produits, sur laquelle est imprimé un code à deux dimensions, formé d'une matrice à deux dimensions constituée de cases d'une couleur et d'autres cases d'une autre couleur, ce code à deux dimensions encodant un identifiant d'un serveur, et
- un symbole tactile permettant à une personne malvoyante de localiser avec ses doigts le code à deux dimensions, ce symbole tactile comprenant au moins deux parties en relief situées de part et d'autre du centre du code à deux dimensions et à moins d'un centimètre de la périphérie la plus proche de ce code à deux dimensions, le centre du code à deux dimensions étant le centre du plus petit cercle incluant le code à deux dimensions,
   **caractérisée en ce que** les parties en relief sont réalisées par une surépaisseur de vernis dont la hauteur est d'au moins 160µm par rapport à la face sur laquelle est imprimé le code à deux dimensions.

Les modes de réalisation de cette étiquette présentent les caractéristiques suivantes:
■ au moins deux parties du symbole tactile sont symétriques par rapport au centre du code à deux dimensions,
■ au moins deux parties du symbole tactile sont symétriques par rapport à un axe de symétrie passant par le centre du code à deux dimensions,
■ le symbole tactile est entièrement situé sur le code à deux dimensions et les parties en relief sont réalisées à l'aide d'un vernis transparent à la lumière visible.

Ces modes de réalisation présentent les avantages suivants:
- si au moins deux parties du symbole tactile sont symétriques par rapport au centre du code à deux dimensions ou à un axe passant par ce centre, alors la localisation du code par une personne malvoyante est plus précise;
- si le symbole tactile est entièrement situé sur le code à deux dimensions et les parties en relief sont réalisées à l'aide d'un vernis transparent à la lumière visible, alors la localisation du code est précise et la lecture du code n'est pas modifiée par la présence du vernis du fait de sa transparence à la lumière visible.

Selon un mode de réalisation de cette étiquette, la largeur à mi-hauteur des parties en relief est inférieure à 1 mm.

L'invention a également pour objet un procédé de fabrication de l'étiquette ci-dessus comportant:
- l'impression sur une face, destinée à être collée sur des produits, d'un code à deux dimensions, formé d'une matrice à deux dimensions constituée de cases d'une couleur et d'autres cases d'une autre couleur, ce code à deux dimensions encodant un identifiant d'un serveur, et
- l'impression d'un symbole tactile permettant à une personne malvoyante de localiser avec ses doigts le code à deux dimensions, ce symbole tactile comprenant au moins deux parties en relief situées de part et d'autre du centre du code à deux dimensions et à moins d'un centimètre de la périphérie la plus proche de ce code à deux dimensions, le centre du code à deux dimensions étant le centre du plus petit cercle incluant le code à deux dimensions,
   **caractérisé en ce que** l'impression du symbole tactile comprend la réalisation des parties en relief par une surépaisseur de vernis dont la hauteur est d'au moins 160µm par rapport à la face sur laquelle est imprimé le code à deux dimensions.

Un mode de réalisation de ce procédé comprend la caractéristique suivante:
- lors de l'impression du symbole tactile, le vernis utilisé présente une viscosité supérieure à 1000 mPa.s.

Ce mode de réalisation présente l'avantage suivant:
- si le vernis présente une viscosité supérieure à 1000 mPa.s, alors le vernis est suffisamment visqueux pour former une surépaisseur en relief.

L'invention sera mieux comprise à la lecture de la description qui va suivre, donnée uniquement à titre d'exemple non limitatif et faite en se référant aux dessins sur lesquels:
- la figure 1 est une illustration schématique d'un système d'informations pour malvoyants, sur des produits;
- la figure 2 est une vue de face d'un code à deux dimensions d'une étiquette utilisée dans le système de la figure 1;
- la figure 3 est une vue schématique de face d'un symbole tactile du système de la figure 1,
- la figure 4 est une vue partielle en coupe d'un point constituant le symbole tactile de la figure 3;
- la figure 5 est un organigramme d'un procédé de fabrication et d'utilisation du système de la figure 1.

Dans ces figures, les mêmes références sont utilisées pour désigner les mêmes éléments.

Dans la suite de cette description, les caractéristiques et fonctions bien connues de l'homme du métier ne sont pas décrites en détail.

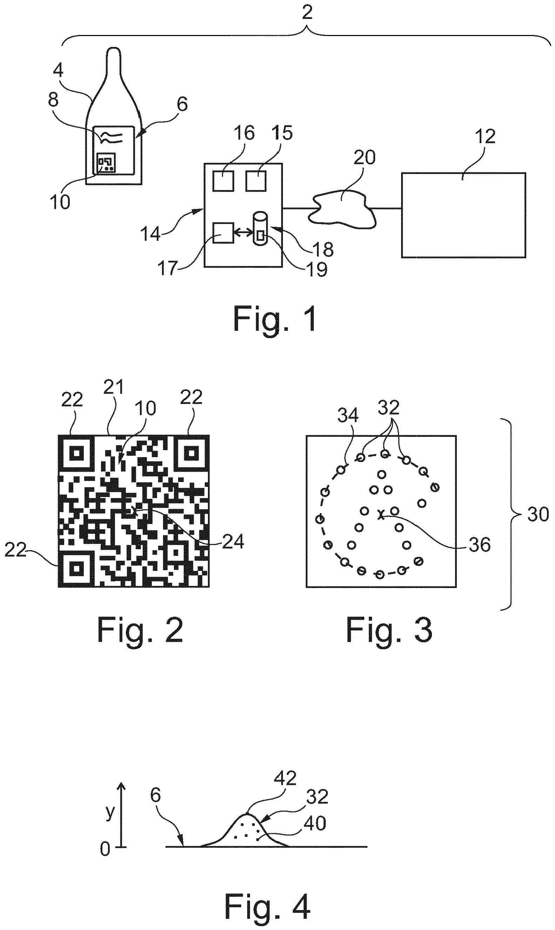

La figure 1 schématise un système d'informations 2 pour malvoyants sur des produits. Ce système 2 permet de fournir des informations sur des produits de consommation, sous une forme directement perceptible et compréhensible par des personnes malvoyantes. Ce système 2 est destiné à donner des informations sur une multitude de produits. Pour simplifier la figure 1, le système 2 est décrit dans le cas d'un seul produit 4. Typiquement le produit 4 est un produit de consommation courante que l'on retrouve sur les étagères d'un supermarché. Le produit 4 comporte une étiquette 6 dont une face arrière est collée sur le produit. Dans ce mode de réalisation particulier, une face avant de l'étiquette 6 a été imprimée au préalable. L'étiquette 6 présente donc une face imprimée solidaire du produit 4. Ici, différentes informations relatives au produit 4 sont imprimées sur l'étiquette 6, telles que le nom 8 du produit. Un code 10 à deux dimensions est également imprimé sur l'étiquette 6. Ce code 10 sera décrit plus en détails à la figure 2. Le code 10 encode un identifiant d'un serveur 12. Ici, par exemple, l'identifiant est une adresse URL (Uniform Ressource Locator) d'un site internet.

Le code à deux dimensions 10 présent sur l'étiquette 6 est capturé par un appareil électronique de lecture 14 équipé d'un haut-parleur 15 et d'un capteur 16.

Pour cela, l'appareil 14 est placé et orienté de telle sorte que le code 10 soit dans le champ de lecture du capteur 16. Le champ de lecture du capteur 16 est le champ visuel capté, il se définit par un angle de champ. L'angle de champ est par exemple inférieur à 90°, ou inférieur à 70°, ou encore inférieur à 50°.

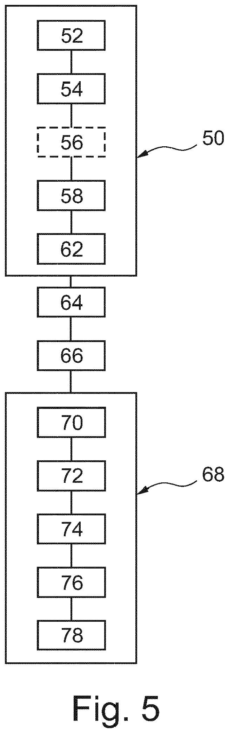

L'appareil 14 est réalisé à partir d'un calculateur électronique programmable 17 apte à exécuter des instructions sur un support d'enregistrement d'informations. A cet effet, l'appareil 14 comporte une mémoire 18 contenant des instructions pour exécuter le procédé de la figure 5. Ici, l'appareil 14 est un téléphone portable, communément appelé "smartphone", et le capteur 16 est une caméra. L'appareil 14 comporte un logiciel 19 de lecture de l'identifiant du code 10, et permet d'accéder au serveur 12. Les instructions du logiciel 19 sont enregistrées dans la mémoire 18.

L'appareil 14 est connecté au serveur 12 par un réseau grande distance 20 de transmission sans fil d'informations. Ici, le réseau 20 est un réseau internet.

Le serveur 12 restitue, via le haut-parleur 15 de l'appareil 14, un message vocal. Ce message vocal contient des informations sur le produit 4 auxquelles la personne malvoyante peut donc avoir accès.

La figure 2 illustre un code 10 à deux dimensions de l'étiquette 6. Un code à deux dimensions est formé d'une matrice à deux dimensions comprenant des cases d'une couleur et d'autres cases d'une autre couleur. Ici, le code à deux dimensions 10 a la forme d'un carré 21 et les cases sont en noir ou blanc. La mesure du côté du carré 21 constituant le code 10 est au moins égale à 5 mm ou 1 cm, et de préférence 1,5 cm, ou encore 2 cm.

Le code à deux dimensions 10 peut être un code Datamatrix, un QRcode (Quick Response Code), un Flashcode, un Maxicode (dans lequel figure une cible au centre du code). Ici, le code 10 est un QRcode.

Le carré 21 constituant le code 10 comporte trois carrés identiques 22 situés dans trois de ses angles. Les carrés 22 ont pour fonction d'orienter le code 10 et de délimiter précisément ses contours. Les carrés 22 sont ici eux-mêmes constitués d'un carré intérieur contenu à l'intérieur du carré 22. Une bande blanche sépare le carré intérieur du carré 22. La mesure du côté du carré 22 est comprise entre 1/8 et 3/8 de la mesure du côté du carré 21, et, de préférence, entre 1/6 et 1/3 de cette mesure.

Le code 10 comporte un centre 24. Le centre 24 est le centre du plus petit cercle incluant le code 10. Ici, le code 10 est une forme géométrique simple, un carré 21, donc le centre 24 est le centre du carré 21.

Pour que la personne malvoyante puisse localiser ce code à deux dimensions 10 sur le produit 4, un symbole tactile est imprimé sur le code 10. Ce symbole tactile est uniquement représenté à la figure 3.

La figure 3 illustre un symbole tactile 30. Ici, le symbole 30 est composé de points circulaires 32, tous identiques. Le symbole 30 comporte au moins deux points distincts, et de préférence plus de six points. Ici, le symbole tactile 30 comporte vingt-quatre points. De préférence, les points 32 sont distants les uns des autres d'au moins 1 mm et la distance maximale entre deux points les plus proches du symbole 30 est inférieure à 8 mm, et de préférence, inférieure à 5 mm. Le diamètre des points 32 est d'au moins 0,5 mm, et de préférence supérieur à 0,8 mm, ou 1 mm. Ici, une partie des points 32 est disposée le long d'un arc de cercle 34 s'étendant sur plus de 270°. Cet arc de cercle 34 présente un centre 36. Le rayon de courbure de l'arc de cercle 34 est inférieur d'au moins 4 mm, et de préférence de 3 mm ou 2 mm ou 1 mm, ou encore 0,5 mm à la moitié de la longueur du côté de la matrice constituant le code 10. Quatorze points 32 se situent le long de cet arc de cercle 34. Neuf autres points se situent à l'intérieur de cet arc de cercle 34. Ces neufs points dessinent un « V » inversé ayant un axe de symétrie passant par le centre 36. Une extrémité de ce V vient jouxter une extrémité de l'arc de cercle 34. Le dernier point 32 du symbole 30 se situe entre l'autre extrémité de l'arc de cercle 34 et la partie du V qui se situe du côté de cette extrémité.

Le centre 36 de l'arc de cercle 34 se trouve à une distance inférieure à 5 mm, ou 3 mm, ou de préférence 1 mm du centre 24 du code 10. Cette distance est telle que chaque point 32 constituant le symbole tactile 30 se trouve sur le code 10. Ici, le centre 36 est confondu avec le centre 24.

La figure 4 illustre une vue partielle en coupe d'un point 32 du symbole tactile 30.

Les points 32 sont imprimés sur l'étiquette 6 et plus précisément sur le code à deux dimensions 10 par un procédé de sérigraphie. Ces points 32 sont ici tous identiques et seul un point va maintenant être décrit plus en détail en référence à la figure 4. Le point 32 est entièrement réalisé par une surépaisseur d'un vernis 40. Les points 32 sont imprimés, dans ce mode de réalisation, sur le code à deux dimensions 10. Pour cette raison, le vernis 40 est choisi transparent à la lumière visible. En effet, un manque de transparence du vernis 40 gênerait la lecture du code 10 par l'appareil de lecture 14. Dans ce mode de réalisation, le vernis 40 est uniquement déposé à l'emplacement des points 32 et ne s'étend pas entre les points 32.

La figure 4 est orientée selon un axe (OY) où le point O, origine de l'axe, se trouve sur la face avant de l'étiquette 6, et plus précisément sur le code 10. La direction Y est une direction perpendiculaire à cette face avant. Chaque point du contour délimitant le point 32 a une abscisse selon l'axe (OY). Le sommet 42 du point 32 est le point du contour qui a la plus grande abscisse selon cet axe. La hauteur de la surépaisseur de vernis 40 est l'abscisse du sommet 42.

Pour être palpable et reconnaissable par les malvoyants, la hauteur de la surépaisseur de vernis 40 constituant chaque point 32 est supérieure à 160µm et, de préférence, supérieure à 170µm, ou encore 180µm. Généralement, la hauteur de la surépaisseur de vernis 40 est inférieure à 1 mm.

Pour obtenir une telle surépaisseur ponctuelle de vernis, le vernis 40 est un vernis à grande viscosité. Ici, par exemple, la viscosité du vernis 40 à 20°C est supérieure à 1000 mPa.s, et de préférence supérieure à 3000 mPa.s, ou encore 3500 mPa.s. Par exemple, le vernis 40 est celui commercialisé sous la référence 78-3-025 chez le fournisseur SIEGWERK, ou la référence UVD 001120-108 chez FLINT, ou encore la référence SR BR 150 chez ZELLER. Ces références sont un exemple parmi un grand choix d'autres références possibles chez de multiples fournisseurs.

La figure 5 est un organigramme d'un procédé de fabrication et d'utilisation du système 2.

Une première phase 50 correspond à la fabrication d'une étiquette 6 utilisée dans le système 2.

Cette phase débute par la fourniture, lors d'une étape 52, d'un support adhésif sur lequel plusieurs étiquettes 6 vont être fabriquées. Par la suite, pour simplifier la description, seule la fabrication d'une seule étiquette 6 est décrite.

Lors d'une étape 54, différentes informations relatives au produit 4 sont imprimées sur la face avant de l'étiquette 6. Par exemple, le nom 8 du produit est imprimé. En même temps, le code à deux dimensions 10 est imprimé sur l'étiquette 6. Par exemple, le code 10 est imprimé en même temps que les autres informations ayant la même couleur. Pour localiser exactement le code 10, des repères de position sont également imprimés sur le support.

Eventuellement, lors d'une étape 56, une couche de vernis est déposée sur l'ensemble de la face avant de l'étiquette 6 pour protéger les informations et le code 10 imprimés lors de l'étape 54. Le vernis utilisé lors de l'étape 56 présente une très faible viscosité. Typiquement, sa viscosité est inférieure à 100mPa.s et, de préférence, inférieure à 10mPa.s.

Lors d'une étape 58, le symbole tactile 30 est imprimé par un procédé de sérigraphie sur le code 10 de l'étiquette 6. Plus précisément, un écran de sérigraphie rotatif est utilisé. En effet, les étiquettes à imprimer se présentent sous la forme d'une bobine comportant un rouleau autour duquel est enroulée une bande d'étiquettes à imprimer. Lors de l'impression la bande est déroulée et l'écran de sérigraphie rotatif est entraîné en rotation, par une machine d'impression rotative, pour imprimer les points 32 sur chaque étiquette. Lors de cette étape, les repères imprimés lors de l'étape 54 permettent de caler exactement l'impression du symbole 30 sur le code 10.

Ensuite, les étiquettes 6 sont découpées lors d'une étape 62. Les repères de position décrits précédemment sont alors découpés et ne figurent plus sur l'étiquette 6.

Lors d'une étape 64, l'étiquette 6 est collée sur le produit 4.

Le produit 4 est ensuite présenté dans un rayon de supermarché par exemple, lors d'une étape 66.

Une phase 68 d'utilisation du système 2 est alors exécutée.

Lors d'une étape 70, la position du code 10 est repérée par une personne malvoyante. Pour cela, la personne malvoyante passe ses doigts sur le produit 4 et, grâce au symbole tactile 30 présent sur le code 10, repère le code 10.

Lors d'une étape 72, la personne malvoyante, munie de l'appareil 14 dirige le capteur 16 de telle sorte que le code 10, dont la position a été précédemment repérée, soit dans le champ de lecture du capteur 16. Le code 10 est alors capturé par le capteur 16.

Lors d'une étape 74, l'appareil 14 lit l'identifiant encodé par le code 10.

Lors d'une étape 76, l'appareil 14 se connecte automatiquement au serveur 12 dont l'identifiant est l'adresse URL encodée par le code 10.

En réponse, lors d'une étape 78, le serveur 12 transmet à l'appareil 14 un message vocal contenant des informations sur le produit 4. Lors de cette étape, l'appareil 14 restitue sous forme d'un message audible et compréhensible les informations sur le produit 4 fournies par le serveur 12.

D'autres modes de réalisation sont possibles.

La matrice du code à deux dimensions 10 peut avoir une autre forme qu'un carré. Elle peut être rectangulaire, circulaire, ou avoir encore une autre forme.

L'étiquette 6 peut avoir la même forme que la matrice du code 10, ou une forme différente.

Le support sur lequel sont fabriquées les étiquettes 6 peut être un support non adhésif.

L'étiquette 6 peut comporter un ou plusieurs volets.

Les parties en relief constituant le symbole tactile 30 peuvent être imprimées sur l'étiquette 6, mais aussi en dehors du code 10. Certaines parties peuvent être sur le code 10 et d'autres à l'extérieur du code 10. Lorsque des parties en relief sont imprimées en dehors du code 10, celles-ci se situent à moins d'un centimètre et, de préférence à moins de 5 ou 1 mm, de la périphérie la plus proche du code 10. Les parties en relief qui se situent sur le code 10 sont réalisées en vernis 40 transparent à la lumière visible. Les parties du symbole 30 qui ne se trouvent pas sur le code 10 peuvent être réalisées avec un vernis coloré.

La forme du symbole tactile 30 peut être différente de celle décrite ci-dessus.

Le symbole tactile 30 peut être constitué d'une forme continue et non pas de points espacés les uns des autres. Par exemple, les parties en relief du symbole tactile sont des bordures continues en vernis délimitant le pourtour du code 10.

Le symbole tactile 30 peut ne pas être constitué de points circulaires 32, mais en forme de T, d'équerres, de barres... Par exemple, les parties en relief du symbole 30 peuvent être des angles jouxtant les quatre coins du code 10.

L'information sur le produit 4 peut être restituée à la personne malvoyante sous une autre forme qu'un message vocal. Par exemple, elle peut être restituée sous forme d'un fichier texte retranscrit en caractère braille ou sous d'autres formes encore.

Le code 10 peut ne pas encoder une adresse URL d'un site internet mais un numéro de téléphone, composé automatiquement et relié à un serveur audiophonique. Le serveur audiophonique joue alors un message vocal donnant des informations sur le produit.

Le réseau 20 peut être un autre réseau qu'internet, il peut être un réseau téléphonique, par exemple.

Le code 10 peut être imprimé lors d'une autre étape que l'étape 54 où sont imprimées différentes informations relatives au produit.

Le code 10 n'est pas forcément sur une étiquette 6 mais peut être imprimé directement sur l'emballage du produit 4, par exemple, sur un pack en carton. Le code 10 peut aussi être imprimé sur le bouchon du produit, par exemple.

Les informations sur le produit peuvent être de toute nature, telles que la composition du produit, une notice d'utilisation ou autres.

## Revendications

1. Système d'informations (2) pour malvoyants, sur des produits (4), comportant:
- une face (6) solidaire du produit, sur laquelle est imprimé un code à deux dimensions (10), formé d'une matrice à deux dimensions constituée de cases d'une couleur et d'autres cases d'une autre couleur, ce code à deux dimensions (10) encodant un identifiant d'un serveur (12),
- un serveur (12) correspondant à l'identifiant encodé par le code à deux dimensions (10), ce serveur (12) étant programmé pour donner des informations sur le produit (4) sur lequel figure le code à deux dimensions (10),
- un appareil électronique de lecture (14) du code à deux dimensions (10) équipé d'un capteur (16) apte à acquérir le code à deux dimensions (10) uniquement lorsque celui-ci se trouve dans le champ de lecture de ce capteur, cet appareil (14) étant apte:
• à décoder l'identifiant encodé dans le code (10) acquis,
• à se connecter par l'intermédiaire d'un réseau grande distance de transmission sans fil d'informations au serveur correspondant à l'identifiant décodé, et
• à restituer les informations sur le produit (4) fournies par ce serveur (12) sous une forme directement perceptible et compréhensible par une personne malvoyante, et
- un symbole tactile (30) permettant à une personne malvoyante de localiser avec ses doigts le code à deux dimensions (10), ce symbole tactile (30) comprenant au moins deux parties (32) en relief situées de part et d'autre du centre (24) du code à deux dimensions (10) et à moins d'un centimètre de la périphérie la plus proche de ce code à deux dimensions (10), le centre (24) du code à deux dimensions (10) étant le centre du plus petit cercle incluant le code à deux dimensions (10),
**caractérisé en ce que** ces parties (32) en relief sont réalisées par une surépaisseur de vernis (40) dont la hauteur est d'au moins 160µm par rapport à la face sur laquelle est imprimé le code à deux dimensions (10).

2. Système (2) selon la revendication 1, dans lequel l'appareil de lecture (14) restitue les informations sur les produits (4) sous forme d'un message vocal directement audible et compréhensible par un être humain.

3. Etiquette (6) pour la réalisation d'un système d'informations (2) conforme à l'une quelconque des revendications précédentes, cette étiquette (6) comprenant:
- une face, destinée à être collée sur des produits (4), sur laquelle est imprimé un code à deux dimensions (10), formé d'une matrice à deux dimensions constituée de cases d'une couleur et d'autres cases d'une autre couleur, ce code à deux dimensions (10) encodant un identifiant d'un serveur (12), et
- un symbole tactile (30) permettant à une personne malvoyante de localiser avec ses doigts le code à deux dimensions (10), ce symbole tactile (30) comprenant au moins deux parties (32) en relief situées de part et d'autre du centre (24) du code à deux dimensions (10) et à moins d'un centimètre de la périphérie la plus proche de ce code à deux dimensions (10), le centre (24) du code à deux dimensions (10) étant le centre du plus petit cercle incluant le code à deux dimensions (10),
**caractérisée en ce que** les parties (32) en relief sont réalisées par une surépaisseur de vernis (40) dont la hauteur est d'au moins 160µm par rapport à la face sur laquelle est imprimé le code à deux dimensions (10).

4. Etiquette (6) selon la revendication 3, dans laquelle au moins deux parties en relief (32) du symbole tactile (30) sont symétriques par rapport au centre (24) du code à deux dimensions (10).

5. Etiquette (6) selon la revendication 3, dans laquelle au moins deux parties en relief (32) du symbole tactile (30) sont symétriques par rapport à un axe de symétrie passant par le centre (24) du code à deux dimensions (10).

6. Etiquette (6) selon l'une quelconque des revendications 3 à 5, dans laquelle le symbole tactile (30) est entièrement situé sur le code à deux dimensions (10) et les parties (32) en relief sont réalisées à l'aide d'un vernis (40) transparent à la lumière visible.

7. Etiquette (6) selon l'une quelconque des revendications 3 à 6, dans laquelle la largeur à mi-hauteur des parties (32) en relief est inférieure à 1 mm.

8. Procédé de fabrication d'une étiquette conforme à l'une quelconque des revendications 3 à 7, dans lequel le procédé comporte:
- l'impression (54) sur une face, destinée à être collée sur des produits (4), d'un code à deux dimensions (10), formé d'une matrice à deux dimensions constituée de cases d'une couleur et d'autres cases d'une autre couleur, ce code à deux dimensions (10) encodant un identifiant d'un serveur (12), et
- l'impression (58) d'un symbole tactile (30) permettant à une personne malvoyante de localiser avec ses doigts le code à deux dimensions (10), ce symbole tactile comprenant au moins deux parties (32) en relief situées de part et d'autre du centre (24) du code à deux dimensions (10) et à moins d'un centimètre de la périphérie la plus proche de ce code à deux dimensions (10), le centre (24) du code à deux dimensions (10) étant le centre du plus petit cercle incluant le code à deux dimensions (10),
**caractérisé en ce que** l'impression (58) du symbole tactile (30) comprend la réalisation des parties en relief (32) par une surépaisseur de vernis (40) dont la hauteur est d'au moins 160µm par rapport à la face sur laquelle est imprimé le code à deux dimensions (10).

9. Procédé selon la revendication 7, dans lequel lors de l'impression (58) du symbole tactile (30), le vernis (40) utilisé présente une viscosité supérieure à 1000 mPa.s.
